# DEMANDE DE BREVET EUROPEEN

(11) **EP 1 767 799 A1**
(43) Date de publication de la demande: **28.03.2007**
(21) Numéro de dépôt: 06291289.4
(22) Date de dépôt: 09.08.2006
(51) Int. Cl.: F16C 33/04, F16C 33/08, F16C 17/02, F16C 33/20, F16C 33/06, F16C 33/12

(54) **Dispositif de palier lisse pour arbre, et arbre et moteur associés**

(30) Priorité: 22.09.2005 FR 0509718
(71) Demandeur: Aktiebolaget SKF, 415 50 Göteborg (SE)
(72) Inventeur: Hedman, Torbjörn, 37540 Saint Cyr Sur Loire (FR); Robert, Eric, 37100 Tours (FR); Lönnfält, Per, 52338 Ulricehamn (SE)
(74) Mandataire: Casalonga, Axel

(57) **Abrégé**

Le dispositif de palier lisse pour arbre, notamment pour arbre à cames de moteur à combustion interne, comprend un corps de palier 11, des première et seconde portées disposées dans ledit corps de palier de manière à former un alésage adapté audit arbre et respectivement destinées à supporter des charges élevées et faibles. Seule la première portée est pourvue, sur sa surface interne, d'un revêtement 16 comprenant du carbone amorphe apparenté au diamant, le dispositif étant pourvu, en outre, d'au moins un moyen d'anti-rotation 17 disposé sur au moins une des portées pour l'immobilisation angulaire desdites portées par rapport au corps de palier.

## Description

La présente invention concerne le domaine des dispositifs de palier lisse pour arbres, et notamment pour arbres à cames de moteurs à combustion interne de véhicules automobiles.

De façon générale, un moteur à combustion interne est pourvu d'au moins un cylindre et d'une culasse comprenant une face feu obturant le cylindre et délimitant une chambre de combustion. Un moteur peut par exemple comprendre trois, quatre, six ou huit cylindres, qui sont disposés en ligne, en V, ou encore à plat à 180°. Des pistons disposés dans chacun des cylindres peuvent se déplacer en translation et sont reliés chacun à une bielle, elle-même reliée à un vilebrequin. L'ensemble bielles et vilebrequin permet de transformer le mouvement alternatif des pistons en un mouvement rotatif.

De manière à permettre l'admission ou l'échappement de gaz à l'intérieur des chambres de combustion, le moteur comprend également des soupapes dont l'ouverture et la fermeture sont commandées directement ou indirectement, via un poussoir, lors de la rotation d'un arbre à cames entraîné par le vilebrequin par l'intermédiaire d'une courroie crantée, d'une chaîne ou d'une cascade de pignons.

L'arbre à cames est généralement monté à l'intérieur du bloc moteur par l'intermédiaire de deux paliers à roulement disposés au voisinage des ses extrémités libres. En outre, afin d'éviter d'éventuels fléchissements de l'arbre, on prévoit généralement au moins un palier intermédiaire, du type palier lisse, disposé axialement entre desdites cames.

Un tel palier lisse peut comporter un corps de palier réalisé en deux parties sur chacune desquelles est ménagée une portée semi-cylindrique de manière à pouvoir former un alésage adapté au diamètre de l'arbre à cames, après le montage dudit arbre sur les paliers à roulement.

En fonctionnement, lors de l'actionnement des soupapes par l'arbre à cames, une des portées du palier lisse est généralement soumise à des efforts relativement plus importants. Ainsi, dans le but d'obtenir des paliers présentant une sûreté de fonctionnement accrue, on prévoit des première et seconde portées réalisées dans des matériaux différents qui sont chacun adapté aux sollicitations mécaniques à supporter.

C'est ainsi que le document GB-A-2 150 986 décrit un palier lisse pour arbre comprenant un corps de palier en deux parties et deux bagues semi-cylindriques, ou demi-bagues, réalisées en aluminium et nickel aptes à former un alésage adapté à l'arbre. Lors de la fixation relative des deux parties du corps, les demi-bagues sont immobilisées en rotation à l'intérieur du corps de palier.

Une immobilisation angulaire des demi-bagues uniquement par friction entre deux matériaux, ne garantit pas un blocage absolu. En effet, en fonctionnement, il est possible que les demi-bagues soient entraînées en rotation par l'arbre, ce qui peut générer un dysfonctionnement du palier, les efforts mécaniques les plus importants pouvant être ainsi transmis à la demi-bague la moins résistante.

La présente invention vise donc à remédier à ces inconvénients en proposant un dispositif de palier lisse fiable, économique, et facile à monter.

La présente invention a également pour but de fournir un dispositif de palier lisse pouvant fonctionner de manière efficace dans des conditions de lubrification réduite.

A cet effet, le dispositif de palier lisse pour arbre, notamment pour arbre à cames de moteur à combustion interne, comprend un corps de palier, des première et seconde portées disposées dans ledit corps de palier de manière à former un alésage adapté audit arbre et respectivement destinées à supporter des charges mécaniques élevées et faibles. Les matériaux des première et seconde portées peuvent être différents l'un et l'autre.

Selon un aspect de l'invention, seule la première portée est pourvue, sur sa surface interne, d'un revêtement comprenant du carbone amorphe apparenté au diamant, le dispositif étant pourvu, en outre, d'au moins un moyen d'anti-rotation disposé sur au moins une des portées pour l'immobilisation angulaire desdites portées par rapport au corps de palier.

Avec un tel dispositif, il devient dès lors possible d'obtenir une immobilisation angulaire des portées de manière particulièrement précise, sûre et économique, tout en réduisant une éventuelle usure prématurée du palier.

En effet, la disposition d'une portée pourvue, sur sa surface interne, d'un revêtement comprenant du carbone amorphe apparenté au diamant permet le fonctionnement du palier dans des conditions de lubrification réduite tout en obtenant une diminution du coefficient de frottement entre l'arbre et le palier, afin de limiter l'usure de ces éléments et d'éventuels risques de grippage.

En outre, la prévision d'un revêtement comprenant du carbone amorphe apparenté au diamant uniquement sur une des portées permet d'obtenir un palier particulièrement économique, notamment par rapport à un palier comprenant deux portées comportant chacune un tel revêtement.

La demanderesse a mis en évidence que l'utilisation de carbone amorphe apparenté au diamant uniquement sur une des portées du palier permettait d'obtenir un bon compromis entre la sûreté de fonctionnement du palier et son coût. En effet, la demanderesse a déterminé que pour obtenir une bonne fiabilité, il était suffisant de prévoir du carbone amorphe uniquement sur la portée destinée à être la plus chargée.

Par ailleurs, avec un tel dispositif, le positionnement angulaire des portées à l'intérieur du corps de palier est non seulement réalisé par friction entre le palier et le corps, mais également par blocage mécanique grâce au moyen d'anti-rotation.

Avantageusement, la première portée comporte une demi-bague de forme semi-cylindrique.

Préférentiellement, le revêtement est constitué par une unique couche qui comporte le carbone amorphe apparenté au diamant, ce qui permet d'accroîre encore le caractère économique du palier.

Avantageusement, le dispositif comprend des moyens d'orientation angulaire de la première portée à l'intérieur du corps du palier.

De tels moyens permettent d'orienter les portées en fonction de la direction de la charge à supporter.

De préférence, les moyens d'orientation angulaire sont constitués en partie par le moyen d'anti-rotation.

Dans un mode de réalisation préféré, le moyen d'anti-rotation comprend au moins une saillie venue de matière avec la portée correspondante.

De préférence, le corps de palier est réalisé en deux parties pourvues de surfaces de contact planes. Les extrémités circonférentielles de la demi-bague sont décalées angulairement par rapport audit plan.

Avantageusement, la saillie est ménagée sur la seconde portée.

Dans un mode de réalisation, la saillie s'étend sensiblement radialement à partir d'une surface extérieure de la portée ladite saillie forme une languette coopérant avec une cavité ménagée dans le corps de palier.

Dans un autre mode de réalisation, la saillie s'étend sensiblement circonférentiellement et coopère avec une demi-bague. Ladite saillie et la seconde portée sont constituées par une des parties du corps de palier.

Dans un autre mode de réalisation, le corps de palier est réalisé en deux parties pourvues de surfaces de contact.

Le moyen d'anti-rotation est constitué par une desdites surfaces de contact planes.

En variante, une demi-bague de la première portée est pourvue de deux saillies disposées chacune à une extrémité circonférentielle de la demi-bague et situées dans le plan, la seconde portée comprenant une demi-bague symétrique à celle de la première portée par rapport audit plan.

Dans un mode de réalisation, une demi-bague constituant la seconde portée est réalisée dans un matériau identique à celui de la demi-bague de la première portée.

Dans un autre mode de réalisation, une demi-bague constituant la seconde portée est réalisée dans un matériau différent de celui de la demi-bague de la première portée.

Dans un mode de réalisation, une demi-bague constituant la seconde portée est réalisée en acier.

Dans un autre mode de réalisation, une demi-bague constituant la seconde portée est réalisée à partir d'un polymère. Le polymère peut être une résine thermoplastique, par exemple un polyamide (PA), notamment un polyamide 4.6.

Avantageusement, la résine thermoplastique comporte au moins un additif apte à réduire le coefficient de friction de ladite portée avec l'arbre, notamment du PTFE.

Avantageusement, une demi-bague constituant la seconde portée est réalisée en alliage léger, notamment en aluminium.

Une demi-bague constituant la première portée peut être en acier, notamment durci par traitement thermique.

L'invention concerne également un arbre à cames de moteur à combustion interne comprenant un dispositif de palier lisse pourvu d'un corps de palier, de premières et secondes portées disposées dans ledit corps de palier de manière à former un alésage adapté audit arbre et respectivement destinées à supporter des charges élevées et faibles.

Selon un aspect de l'invention, seule la première portée est pourvue, sur sa surface interne, d'un revêtement comprenant du carbone amorphe apparenté au diamant, et le dispositif est pourvu, en outre, d'au moins un moyen d'anti-rotation disposé sur au moins une des portées pour l'immobilisation angulaire des portées par rapport au corps de palier.

L'invention concerne enfin un moteur à combustion interne, notamment de véhicule automobile, qui est pourvu d'au moins un cylindre, d'une culasse comprenant une face feu obturant le cylindre et délimitant une chambre de combustion, d'au moins deux orifices formant sièges pour des soupapes d'admission et d'échappement de gaz, d'un arbre à cames pour l'ouverture et la fermeture des soupapes, et d'un dispositif de palier lisse tel que défini précédemment.

Dans une variante de réalisation, seule la première portée du dispositif de palier lisse est pourvue, sur sa surface interne, d'un revêtement comprenant du carbone amorphe apparenté au diamant, le dispositif étant pourvu, en outre, d'au moins une languette monobloc avec une des portées pour l'immobilisation angulaire des portées par rapport au corps de palier.

La présente invention sera mieux comprise à la lecture de la description détaillée de modes de réalisation pris à titre d'exemples nullement limitatifs et illustrés par les dessins annexés, sur lesquels :
- la figure 1 est une vue schématique en coupe d'un montage d'un arbre à cames pourvu d'un dispositif de palier lisse selon un aspect de l'invention,
- la figure 2 est une vue en coupe selon l'axe II-II de la figure 1,
- les figures 3 et 4 sont des vues partielles schématiques en coupe de première et seconde variantes de réalisation du dispositif de palier lisse des figures 1 et 2, et
- la figure 5 est une vue partielle schématique en coupe d'une troisième variante de réalisation du dispositif de palier lisse.

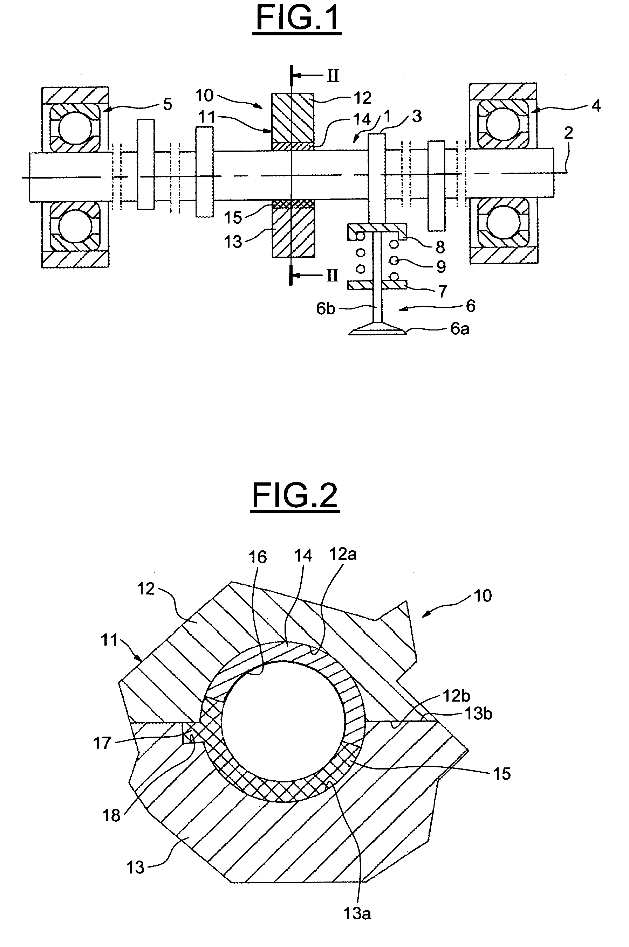

Sur les figures 1 et 2, on a représenté un arbre 1 à cames, d'axe 2 longitudinal, portant extérieurement un ensemble de cames 3, comme cela est connu en soi.

Deux paliers à roulement 4 et 5, sont montés au voisinage des extrémités libres de l'arbre 1, dans des logements (non référencés), prévus à cet effet. Les paliers à roulement 4 et 5, peuvent être de type standard, à faible coût de fabrication. Chaque roulement comprend ici des bagues intérieure et extérieure, entre lesquelles est logée une rangée d'éléments roulants, par exemple réalisés sous forme de billes. Les bagues intérieure et extérieure peuvent avantageusement être de type massive. On entend, par « bague de type massive », une bague dont la forme est obtenue par usinage avec enlèvement de copeaux (tournage, rectification) à partir de tubes, de barres, d'ébauches forgées et/ou roulées.

Bien entendu, il est également envisageable de prévoir des dispositifs de paliers à roulement de conception sensiblement différente, par exemple à rouleaux.

Lors de l'entraînement en rotation de l'arbre 1 à cames, une des cames 3 permet d'agir sur une soupape 6 d'un moteur (non représenté). Pour la clarté du dessin, une unique soupape a été représentée. Bien entendu, le moteur comprend une pluralité de soupapes.

La soupape 6 est ainsi déplacée radialement en translation linéaire et guidée à l'intérieur de la culasse du moteur (non représentée). La soupape 6 peut être une soupape d'admission ou une soupape d'échappement. Elle comprend une tête de soupape 6a apte à venir en contact avec un orifice pratiqué dans une face feu de la culasse et formant siège pour ladite soupape. La soupape 6 comprend également une tige de soupape 6b à une extrémité inférieure de laquelle est fixée ladite tête de soupape 6a. La tige de soupape 6b comprend également une plaque d'appui 8 fixée à une extrémité supérieure de ladite tige et venant en contact avec ladite came 3 de l'arbre 1. Un ressort de rappel 9 est monté entre la plaque d'appui 8 et une face supérieure d'une pièce d'appui 7 rapportée sur la culasse.

De manière à permettre le support de l'arbre à cames 1 et à limiter d'éventuels fléchissements, un dispositif 10 de palier lisse est disposé axialement entre des cames 3 successives, à proximité de la soupape 6. Bien entendu, plusieurs paliers lisses peuvent éventuellement être disposés le long de l'arbre.

Le dispositif 1 comprend un corps 11 de palier réalisé en alliage léger, par exemple à base d'aluminium et/ou de magnésium. Le corps 11 est réalisé en deux parties 12 et 13 supérieure et inférieure identiques. Les parties 12 et 13 sont disposées axialement en regard l'une de l'autre. La partie 12 supérieure comprend une surface intérieure 12a semi-circulaire concave dont le centre est situé sensiblement au niveau d'une surface inférieure 12b. Ladite surface s'étend s'étendant axialement sur l'ensemble la partie 12.

D'une manière analogue, la partie 13 inférieure comprend une surface intérieure 13a semi-circulaire concave, de diamètre égal à la surface intérieure 12a et dont le centre est situé sensiblement au niveau d'une surface supérieure 13b de ladite partie. Ainsi, lorsque les surfaces 12b et 13b sont en contact, les surfaces intérieures 12a et 13a du corps 11 de palier forment un alésage. Les surfaces 12b et 13b définissent un plan de joint du corps de palier 11.

A l'intérieur de l'alésage ainsi formé sont montées des bagues semi-cylindriques, ou demi-bagues 14, 15 supérieure et inférieure de dimensions radiale et axiale adaptées à celles dudit alésage de section circulaire. Les extrémités circonférentielles des demi-bagues 14, 15 sont en contact de manière à former des portées supérieure et inférieure pour l'arbre 1. Les demi-bagues 14, 15 comprennent chacune un corps 14a, 15a semi-cylindrique qui est réalisé en une seule pièce.

Le corps 14a de la demi-bague 14 est réalisé dans un matériau relativement rigide, par exemple de l'acier. L'acier peut être avantageusement durci par traitement thermique et de revenu pour obtenir une dureté comprise avantageusement entre 40 et 65 HRc.

La demi-bague 14 supérieure comprend également sur l'ensemble de la surface intérieure du corps 14a un revêtement 16 semi-cylindrique comprenant une couche de carbone apparenté au diamant, ce qui permet de prévoir un apport de lubrifiant liquide limité. Le carbone apparenté au diamant est connu internationalement sous la désignation DLC.

A titre indicatif, le revêtement 16 en carbone amorphe peut présenter une épaisseur radiale comprise entre 1.5 et 3 µm, une dureté de surface allant de 1000 à 2000 HRc, ainsi qu'une rugosité comprise entre 0.5 et 1.8 µm. L'utilisation de carbone amorphe est particulièrement avantageuse de par ses propriétés tribologiques ainsi que par sa structure chimique limitant d'éventuelles interactions avec l'extérieur.

Ainsi, la demi-bague 14 comprend le corps 14a et le revêtement 16 qui est constitué par une unique couche, cette couche comprenant du carbone amorphe apparenté au diamant. En d'autres termes, le revêtement 16 de type DLC est disposé directement contre le corps 14a de la demi-bague 14 formant substrat.

On obtient donc une demi-bague 14 qui peut fonctionner dans des conditions de lubrification réduite afin de limiter une éventuelle usure, et qui est obtenue de façon particulièrement économique.

Le corps 15a de la demi-bague 15 inférieure peut, quant à lui, être réalisé dans le même matériau que celui utilisé pour le corps 14a de la demi-bague 14. Le corps 15a peut donc être réalisé dans un matériau relativement rigide, par exemple de l'acier.

En variante, il est également envisageable de réaliser le corps 15a dans un matériau relativement souple, par exemple par moulage d'un polymère. Le polymère peut par exemple être une résine thermoplastique. La résine peut avantageusement être un polyamide, notamment un polyamide 4-6. Bien entendu, il est encore possible de prévoir d'autres types de résine, ou encore d'autres additifs par exemple du M_{O}S₂, ou du graphite. En variante, il pourrait également être possible de prévoir une demi-bague 15 réalisée en alliage léger, notamment en aluminium.

Afin de réduire le coefficient de friction entre l'arbre 1 et la demi-bague 15, il est également envisageable de prévoir un additif à l'intérieur du corps 15a, tel que du PTFE.

La demi-bague 15 comprend, en outre, une excroissance ou saillie 17 radiale dirigée vers l'extérieur. La saillie 17 est venue de matière ou monobloc avec la demi-bague 15. Ladite saillie 17 ou languette prolonge, en partie, la surface extérieure du corps 15a de la demi-bague 15, et est logée dans une cavité 18 de forme correspondante ménagée au niveau de la surface supérieure 13b de la partie 13 du corps de palier 11.

La saillie 17, de forme générale rectangulaire, présente une dimension circonférentielle réduite par rapport à celle de la demi-bague 15, pouvant par exemple être comprise entre 10° et 15°. La dimension radiale de la saillie 17 est sensiblement égale à celle de la demi-bague 15, sa dimension axiale pouvant être sensiblement égale ou inférieure à celle de ladite demi-bague.

La saillie 17 est agencée sur le corps 15a de la demi-bague 15 au voisinage d'une des ses extrémités circonférentielles de manière que ladite extrémité soit décalée radialement vers le haut par rapport à la surface supérieure 13b de la partie 13.

Par conséquent, l'extrémité circonférentielle opposée de la demi-bague 15 est décalée radialement vers le bas par rapport à la surface supérieure 13b de la partie13. Ainsi, les extrémités circonférentielles de chacune des demi-bagues 14, 15 sont dans un plan distinct du plan de joint du corps de palier.

Lors du montage, la saillie 17 montée à l'intérieur de la cavité 18 permet de positionner angulairement les demi-bagues 14 et 15 par rapport à l'arbre 1 à cames en fonction de l'orientation et de l'intensité de la charge à supporter qui n'est pas perpendiculaire au plan de joint des deux parties 12 et 13 du corps de palier. La saillie 17 est disposée sur la demi-bague 15 de manière que le plan de symétrie de la demi-bague 14 soit positionné en fonction de la direction de la charge.

En fonctionnement, la saillie 17 et la cavité 18 permettent de maintenir cette orientation par friction et par un blocage mécanique positif. Ces éléments forment ainsi moyens d'orientation angulaire et d'anti-rotation des demi-bagues 14, 15 par rapport à l'arbre 1.

En d'autres termes, la saillie 17 formant languette monobloc avec la demi-bague 15 et la cavité 18 assurent le positionnement et le maintien angulaires des demi-bagues relativement à l'arbre 1 de manière à ce que les sollicitations ou charges relativement élevées et faibles soient respectivement supportées par les demi-bagues 14 et 15.

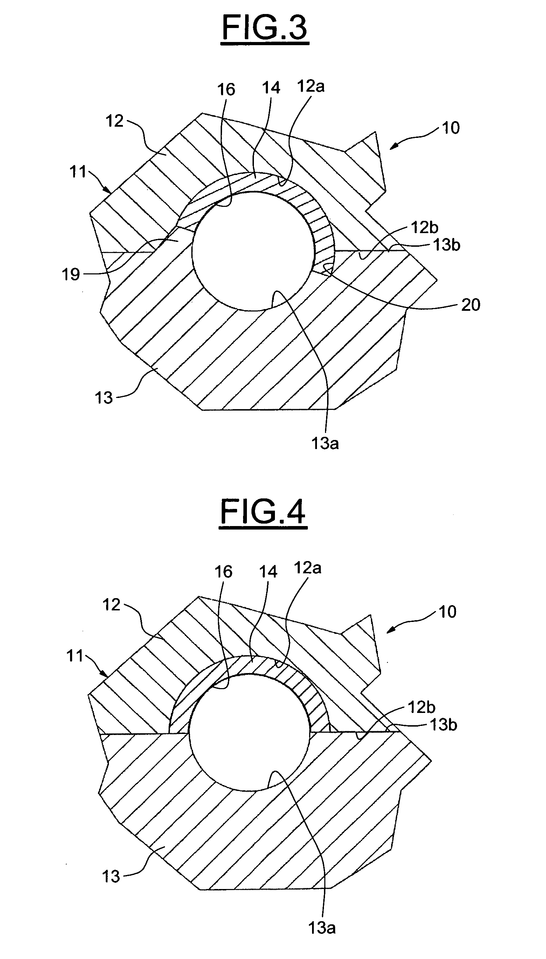

Le mode de réalisation illustré à la figure 3 sur lequel les élément identiques portent les mêmes références diffère en ce que la partie 13 inférieure du corps 11 de palier présente une surface intérieure 13a concave, de diamètre sensiblement égal à celui de la surface intérieure de la demi-bague 14 de manière à ce que la partie 13 et la demi-bague 14 constituent des portées pour l'arbre 1.

La partie 13 est pourvue, en outre, d'une excroissance formant saillie 19 s'étendant sensiblement circonférentiellement par rapport à la surface supérieure 13b, et d'un dégagement 20 opposé à la saillie en considérant un sens circonférentiel, par rapport à la surface intérieure 13a. Bien entendu, la partie 12 du corps 11 de palier est adapté en fonction de la forme de la saillie 19 pour maintenir un contact continu localement dans cette zone entre les parties 12 et 13. Le dégagement 20 est pratiqué sur la surface supérieure 13b et débouche au niveau de l'alésage pour l'arbre 1.

Les extrémités circonférentielles de la demi-bague 14 viennent en contact contre la saillie 19 et le fond du dégagement 20. La saillie 19 et le dégagement 20 forment ainsi des moyen d'orientation angulaire et d'anti-rotation de la demi-bague 14 par rapport à l'arbre 1. L'unique demi-bague 14 est orientée et maintenue selon une direction de charge qui n'est pas perpendiculaire au plan de joint des deux parties 12 et 13 du corps de palier 11. Le plan de symétrie de la demi-bague 14 est donc décalé angulairement par rapport audit plan de joint.

Le mode de réalisation illustré à la figure 4 sur lequel les élément identiques portent les mêmes références diffère du mode de réalisation précédent en ce que le corps 11 de palier est agencé de manière à ce que le plan de symétrie de la demi-bague 14 soit perpendiculaire au plan de joint des deux parties 12 et 13. A cet effet, la surface supérieure 13b est sensiblement plane et dépourvue au voisinage de la surface intérieure 13a d'éléments en saillie ou en creux.

Les extrémités circonférentielles de l'unique demi-bague 14 sont ainsi situées dans le plan de joint des parties 12 et 13 du corps de palier et en contact respectivement avec la surface supérieure 13b. La surface supérieure 13b forme un moyen de positionnement et de maintien de la position angulaire de la demi-bague 14 dans le corps de palier. La demi-bague 14 et la partie 13 du corps forment ainsi respectivement les portées supérieure et inférieure de l'arbre 1, la surface supérieure 13b formant moyen d'anti-rotation de ladite demi-bague.

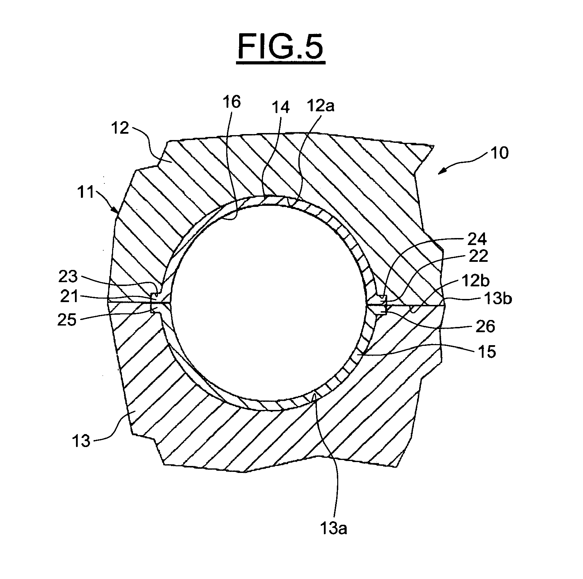

Le mode de réalisation illustré à la figure 5 sur lequel les élément identiques portent les mêmes références diffère du mode de réalisation de la figure 2 en ce que le plan de symétrie des demi-bagues 14 et 15 est perpendiculaire au plan de joint des deux parties 12 et 13 du corps 11 de palier.

La demi-bague 14 semi-cylindrique comprend ici deux excroissances ou saillies 21 et 22, chaque saillie étant disposée à une extrémité circonférentielle du corps 14a de la demi-bague 14 de manière à ce que leur surface inférieure soit située dans le plan de joint des parties 12, 13. Les saillies 21 et 22 sont monoblocs avec le corps 14a de la demi-bague 14. Chaque saillie 21, 22 prolonge radialement vers l'extérieur la surface extérieure du corps 14a de la demi-bague, et est logée respectivement dans une cavité 23, 34 de forme correspondante pratiquée dans la surface inférieure 12b de la partie 12 du corps de palier 11.

La saillie 21, 22 de forme générale rectangulaire, présente une dimension circonférentielle réduite par rapport à celle de la demi-bague 14, pouvant par exemple être comprise entre 5° et 10°. La dimension radiale de la saillie 21, 22 est sensiblement égale à celle de la demi-bague 14, sa dimension axiale pouvant être sensiblement égale ou inférieure à celle de ladite demi-bague.

Avantageusement, la demi-bague 14 peut être réalisée en acier, par exemple en tôle d'acier d'épaisseur constante et formée par découpe et emboutissage. D'une manière analogue au mode de réalisation de la figure 2, la demi-bague 14 comprend le revêtement 16 tel que défini précédemment.

Les demi-bagues 14 et 15 sont symétriques l'une par rapport à l'autre par rapport audit plan de symétrie. Ainsi, la demi-bague 15 comprend également deux saillies 25 et 26 dont les surfaces supérieures sont situées dans le plan de joint des parties 12, 13 et viennent en contact avec les surfaces inférieures des saillies 21 et 22. La demi-bague 15 peut avantageusement être réalisée à partir de tôle d'acier par découpe et emboutissage. La demi-bague 15 peut également être réalisée en alliage léger, par exemple en aluminium, ou encore en matière synthétique rigide.

En variante, il est pourrait également être envisageable de prévoir un corps de palier 11 comprenant une partie 13 présentant une surface intérieure concave de diamètre sensiblement égal à celui de la demi-bague 14 de manière à ce que la partie 13 et une unique demi-bague 14 constituent les portées pour l'arbre.

L'invention permet donc d'obtenir de façon simple et économique un palier lisse dont les éléments sont faciles à assembler et présentent une bonne fiabilité de fonctionnement même avec un apport de lubrifiant relativement élevé. La ou les demi-bagues disposées dans le corps de palier sont parfaitement positionnées et maintenues angulairement dans ledit corps.

## Revendications

1. Dispositif de palier lisse pour arbre, notamment pour arbre à cames de moteur à combustion interne, comprenant un corps de palier (11), des première et seconde portées disposées dans ledit corps de palier de manière à former un alésage adapté audit arbre et respectivement destinées à supporter des charges élevées et faibles, **caractérisé en ce que** seule la première portée est pourvue, sur sa surface interne, d'un revêtement (16) comprenant du carbone amorphe apparenté au diamant, le dispositif étant pourvu, en outre, d'au moins un moyen d'anti-rotation (17 ; 19 ; 13b ; 21, 22) disposé sur au moins une des portées pour l'immobilisation angulaire desdites portées par rapport au corps de palier.

2. Dispositif selon la revendication 1, dans lequel la première portée comporte une demi-bague (14) de forme semi-cylindrique.

3. Dispositif selon la revendication 1 ou 2, dans lequel le revêtement (16) est constitué par une unique couche qui comporte le carbone amorphe apparenté au diamant.

4. Dispositif selon l'une quelconque des revendications précédentes, comprenant des moyens d'orientation angulaire de la première portée à l'intérieur du corps de palier.

5. Dispositif selon la revendication 4, dans lequel les moyens d'orientation angulaire sont constitués en partie par le moyen d'anti-rotation.

6. Dispositif selon l'une quelconque des revendications précédentes, dans lequel le moyen d'anti-rotation comprend au moins une saillie (17 ; 19 ; 21, 22) venue de matière avec la portée correspondante.

7. Dispositif selon la revendication 6, dans lequel la saillie est ménagée sur la seconde portée.

8. Dispositif selon l'une quelconque des revendications 2 à 7, dans lequel le corps de palier est réalisé en deux parties (12, 13) pourvues de surfaces de contact planes, les extrémités circonférentielles de la demi-bague (14) étant décalées angulairement par rapport au plan.

9. Dispositif selon l'une quelconque des revendications 6 à 8, dans lequel la saillie (17) s'étend sensiblement radialement à partir d'une surface extérieure de la portée, ladite saillie coopérant avec une cavité (18) ménagée dans le corps de palier.

10. Dispositif selon l'une quelconque des revendications 6 à 8, dans lequel la saillie (19) s'étend sensiblement circonférentiellement et coopère avec une demi-bague (14) de la première portée, ladite saillie et la seconde portée étant constituées par une des parties du corps de palier.

11. Dispositif selon l'une quelconque des revendications 1 à 5, dans lequel le corps de palier est réalisé en deux parties pourvues de surfaces de contact planes, le moyen d'anti-rotation étant constitué par une desdites surfaces de contact (13b).

12. Dispositif selon la revendication 6, dans lequel le corps de palier est réalisé en deux parties (12, 13) pourvues de surfaces de contact planes, une demi-bague (14) de la première portée étant pourvue de deux saillies (21, 22) disposées chacune à une extrémité circonférentielle de la demi-bague et situées dans le plan, la seconde portée comprenant une demi-bague (15) symétrique à celle de la première portée par rapport audit plan.

13. Dispositif selon l'une quelconque des revendications précédentes, dans lequel une demi-bague (15) constituant la seconde portée est réalisée dans un matériau identique à celui de la demi-bague (14) de la première portée.

14. Dispositif selon l'une quelconque des revendications précédentes, dans lequel une demi-bague (15) constituant la seconde portée est réalisée dans un matériau différent de celui de la demi-bague (14) de la première portée.

15. Dispositif selon l'une quelconque des revendications précédentes, dans lequel une demi-bague (15) semi-cylindrique constituant la seconde portée est réalisée à partir d'un polymère, notamment d'une résine thermoplastique.

16. Dispositif selon l'une quelconque des revendications 1 à 14, dans lequel une demi-bague (15) constituant la seconde portée est réalisée en alliage léger, notamment en aluminium.

17. Dispositif selon l'une quelconque des revendications 1 à 14, dans lequel une demi-bague (14) constituant la première portée est en acier, notamment durci par traitement thermique.

18. Arbre à cames de moteur à combustion interne comprenant un dispositif de palier lisse selon l'une quelconque des revendications 1 à 17.

19. Moteur à combustion interne, notamment de véhicule automobile, pourvu d'au moins un cylindre, d'une culasse comprenant une face feu obturant le cylindre et délimitant une chambre de combustion, d'au moins deux orifices formant sièges pour des soupapes d'admission et d'échappement de gaz, d'un arbre à cames pour l'ouverture et la fermeture des soupapes, et d'au moins un dispositif de palier lisse selon l'une quelconque des revendications 1 à 17 supportant ledit arbre à cames.
